**Europäisches Patentamt**

**European Patent Office**

**Office européen des brevets**

(19)

(11) Veröffentlichungsnummer : **0 022 146**
**B1**

(12) **EUROPÄISCHE PATENTSCHRIFT**

(45) Veröffentlichungstag der Patentschrift :
22.09.82

(21) Anmeldenummer : 80101363.2

(22) Anmeldetag : 15.03.80

(51) Int. Cl.³ : **B 60 R 21/08, H 01 H 29/20**

(54) **Schaltungsanordnung zur Registrierung von Fehlauslösungen für wenigstens eine dem Schutz der Insassen eines Fahrzeugs bei einem Unfall dienende Sicherheitseinrichtung.**

(30) Priorität : 15.06.79 DE 2924252

(43) Veröffentlichungstag der Anmeldung :
14.01.81 (Patentblatt 81/02)

(45) Bekanntmachung des Hinweises auf die Patenterteilung : 22.09.82 Patentblatt 82/38

(84) Benannte Vertragsstaaten :
DE FR GB IT SE

(56) Entgegenhaltungen :
DE A 2 302 680
DE A 2 306 498
DE A 2 851 333
DE B 1 690 535
DE B 2 251 402
DE U 6 922 754
US A 3 354 283

(73) Patentinhaber : **ROBERT BOSCH GMBH**
**Postfach 50**
**D-7000 Stuttgart 1 (DE)**

(72) Erfinder : **Schrauf, Werner**
**Bahnhofstrasse 4**
**D-7141 Schwieberdingen (DE)**
Erfinder : **Werner, Peter, Dipl.-Ing.**
**Im Sommerrain 15**
**D-7135 Wiernsheim-Iptingen (DE)**
Erfinder : **Luetkens, Luer, Dr.**
**Aaraustrasse 85**
**D-7410 Reutlingen (DE)**
Erfinder : **Maue, Hans-Heinrich**
**Lindenstrasse 58**
**D-7120 Bietigheim-Bissingen (DE)**
Erfinder : **Suchowerskyj, Wadym, Dr.**
**Holdergasse 26**
**D-7141 Schwieberdingen (DE)**

Imprimerie Jouve, 18, rue St-Denis, 75001 Paris, France

## Schaltungsanordnung zur Registrierung von Fehlauslösungen für wenigstens eine dem Schutz der Insassen eines Fahrzeugs bei einem Unfall dienenden Sicherheitseinrichtung

### Stand der Technik

Die Erfindung geht aus von einer elektrischen Schaltungsanordnung nach der Gattung des Anspruchs 1.

Insbesondere als Airbag ausgebildeten Sicherheitseinrichtungen sind z.B. aus der US-A-3 622 974 und der US-A 3 874 695 bekannt. Bei diesen bekannten Schaltungsanordnungen liegen zur Vergrößerung der Sicherheit gegen Fehlauslösungen zwei durch Verzögerungssensoren gesteuerte Schalter in Reihe zur Sicherheitseinrichtung, wodurch eine Auslösung der Sicherheitseinrichtung nur dann möglich wird, wenn beide Verzögerungssensoren ansprechen. Bei der Rekonstruktion eines Unfalls, bei dem die Sicherheitseinrichtung ausgelöst wurde, kann nun die Frage auftauchen, ob aufgrund eines Aufpralls die Sicherheitseinrichtung ausgelöst wurde oder ob der Aufprall infolge einer Fehlauslösung der Sicherheitseinrichtung erfolgte. Diese Frage kann entscheidend für Regressforderungen sein. Eine Speicherung von Informationen über eine Fehlauslösung ist aus der DE-A-25 13 023 bekannt. Hierzu wird ein separater Verzögerungssensor benötigt, was den Aufwand beträchtlich erhöht.

Weiterhin ist aus der DE-A-23 02 680 eine Schaltungsanordnung mit den Merkmalen aus dem ersten Teil (Gattung) des Anspruchs 1 der Erfindung bekannt, wobei ein zusätzlicher Kollisionssensor eine als Sicherung ausgebildete Speichereinrichtung so steuert, daß diese durchbrennt, wenn die übrigen Kollisionssensoren ansprechen, der zusätzliche Kollisionssensor dagegen nicht. Auf diese Weise kann eine Fehlfunktion gekennzeichnet werden. Bei dieser Schaltungsanordnung führt jedoch eine solche Fehlfunktion stets zur Auslösung der Sicherheitseinrichtung, was natürlich unerwünscht ist. Darüber hinaus wird der zusätzliche Kollisionssensor ausschließlich für die Speicherung benötigt.

### Vorteile der Erfindung

Die erfindungsgemäße Schaltungsanordnung mit den kennzeichnenden Merkmalen des Anspruchs 1 hat demgegenüber den Vorteil, daß bei nicht ordnungsgemäßer Funktion (Fehlauslösung) der die Sicherheitseinrichtung steuernden Verzögerungssensoren diese Fehlfunktion in der Speichereinrichtung zwar aufgezeichnet, die Auslösung der Sicherheitseinrichtung jedoch verhindert wird. Ein zusätzlicher Verzögerungssensor übernimmt dabei die doppelte Funktion der Verhinderung der Auslösung der Sicherheitseinrichtung und die Steuerung der Aufzeichnung in der Speichereinrichtung.

Durch die in den abhängigen Ansprüchen aufgeführten Maßnahmen sind vorteilhafte Weiterbildungen und Verbesserungen der im Anspruch 1 angegebenen Prüfschaltung möglich.

Da vorteilhaft zuerst der Öffnerschalter und unmittelbar danach der zweite Schalter betätigt werden soll, sind diese Schalter zusammen mit dem steuernden Verzögerungssensor besonders günstig als ein Bauteil, insbesondere als Quecksilberschalter ausgebildet.

Die erfindungsgemäße Anordnung läßt sich auch vorteilhaft mit einer Prüfschaltung kombinieren, durch die eine weitere Erhöhung der Sicherheit gewährleistet wird.

### Zeichnung

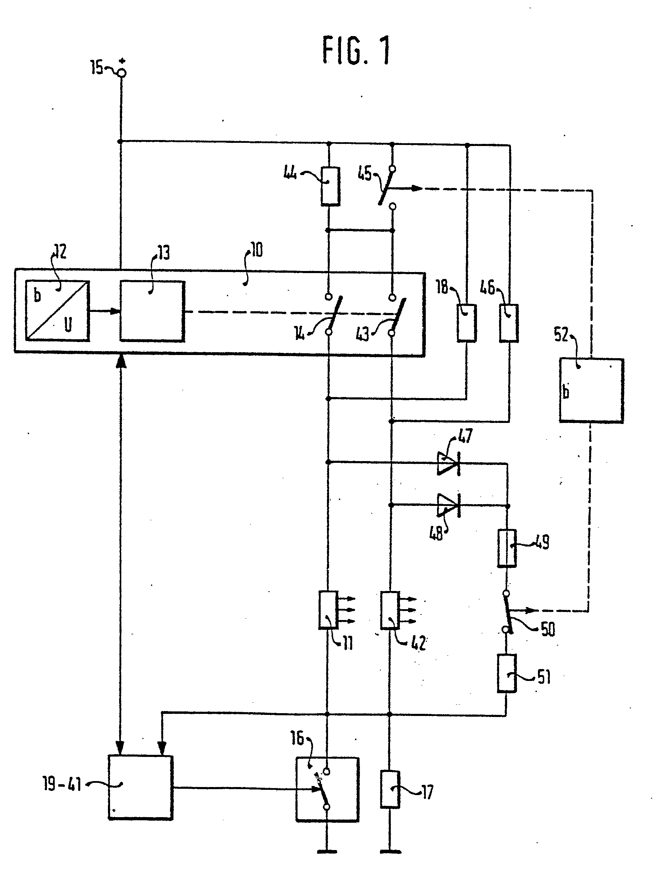

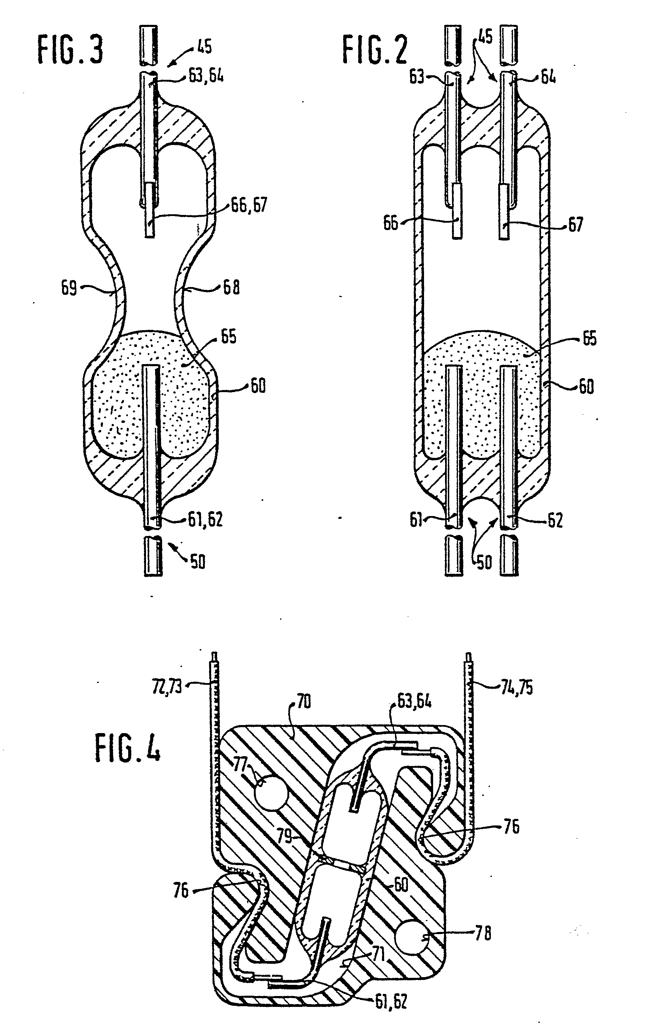

Ausführungsbeispiele der Erfindung sind in der Zeichnung dargestellt und in der nachfolgenden Beschreibung näher erläutert. Es zeigen Fig. 1 ein Ausführungsbeispiel einer Schaltungsanordnung zur Auslösung zweier Sicherheitseinrichtungen mit einer Speichereinrichtung zur Registrierung von Fehlauslösungen, Fig. 2 die Darstellung eines Öffner-Schließer-Schalters mit einem Verzögerungssensor als kombiniertes Bauteil in der Draufsicht, Fig. 3 das in Fig. 2 dargestellte Bauteil in der Seitenansicht und Fig. 4 ein Bauteil gemäß den Fig. 2 und 3 in einem Gehäuse angeordnet.

### Beschreibung der Ausführungsbeispiele

Eine Auslösevorrichtung 10 für zwei Sicherheitseinrichtungen 11, 42 besteht aus einem Verzögerungssensor 12, an dessen Ausgang entweder ein verzögerungsproportionales Signal erzeugt wird oder ein Signal, das erst bei Überschreiten einer festlegbaren Verzögerung erzeugt wird. Dieses Signal wird einer Auswerteelektronik 13 zugeführt, in der dieses Signal daraufhin untersucht wird, ob seine Ursachen in einem Unfall, d.h. in einem Auffahren auf ein Hindernis begründet liegen, oder ob sonstige Beschleunigungsvorgänge zu seiner Entstehung führten, wie z.B. eine starke Bremsung oder ein Steinschlag. Eine solche Auswerteelektronik ist. z.B. aus der US-A-3 911 391 bekannt. Wird ein Unfall erkannt, so wird ein Signal erzeugt, durch das die vorzugsweise als Transistoren ausgebildeten Schalter 14, 43 geschlossen werden. Ein Anschluß des Schalters 14 ist über die Reihenschaltung einer Sicherheitseinrichtung 11 mit einem weiteren Schalter 16 an Masse angeschlossen. Parallel zum Schalter 16 ist ein Widerstand 17 geschaltet. Der Verknüpfungspunkt des Schalters 16 mit dem Widerstand 17 ist über eine weitere Sicherheitseinrichtung 42 an einen Anschluß des Schalters 43 gelegt. Die Sicherheitseinrichtungen 11, 42 können z.B. aus einem Glühdraht bestehen, durch den ein explosives chemisches Gemisch gezündet werden kann, das daraufhin explosionsartig einen Luftsack (Airbag) füllt. Dieser Luftsack verhindert bei einem Unfall den Aufprall des Fahrers auf das Armaturenbrett.

Die miteinander verbundenen, zweiten Anschlüsse der Schalter 14, 43 sind über die Parallelschaltung eines Widerstands 44 mit einem weiteren Schalter 45 an eine mit dem positiven Pol einer Versorgungsspannungsquelle verbundene Klemme 15 angeschlossen. Diese Klemme 15 versorgt weiterhin die Auslösevorrichtung 10 und ist über zwei Widerstände 18, 46 mit den beiden Sicherheitseinrichtung 11, 42 verbunden.

Eine Prüfschaltung 19 bis 41 ist mit der Auslösevorrichtung 10 sowie mit dem Verknüpfungspunkt zwischen den beiden Sicherheitseinrichtungen 11, 42 verbunden und steuert den Schalter 16.

Die Verknüpfungspunkte der Schalter 14, 43 mit den Sicherheitseinrichtungen 11, 42 sind über je eine Diode 47, 48 an eine vorzugsweise als Schmelzsicherung ausgebildete Speichereinrichtung 49 angeschlossen, deren zweiter Anschluß über die Reihenschaltung eines Öffner-Schalters 50 mit einem Widerstand 51 an den Verknüpfungspunkt. der beiden Sicherheitseinrichtungen 11, 42 angeschlossen ist. Die Schaltstellungen des als Öffner-Schalters ausgebildeten Schalters 50 sowie des als Schließer-Schalter ausgebildeten Schalters 45 sind miteinander gekoppelt und durch einen Verzögerungssensor 52 bestimmt.

Die aus den Bauteilen 10 bis 41 bestehende Schaltung ist bereits in der älteren EP-A-11 680 (mit Priorität vom 28. 11. 78, veröffentlicht am. 8. 8. 79) beschrieben. Die entsprechenden Bauteile tragen dort dieselben Benzugsziffern. Durch die Prüfschaltung 19 bis 41 wird nach Einschalten der Versorgungsspannung jeweils ein Prüfprogramm gestarter, das die sichere Funktion der Auslösevorrichtung 10 überprüft. Der Schalter 16 wird insbesondere während des Prüfprogramms jeweils dann geöffnet, wenn der Schalter 14 geschlossen wird, um eine Auslösung der Sicherheitseinrichtung 11 während des Prüfprogramms zu verhindern. Der über die Widerstände 18, 17 fließende Strom reicht dabei nicht aus, die Sicherheitseinrichtung 11 auszulösen. Die nähere Beschreibung der Wirkungsweise der Prüfschaltung 19 bis 41 kann aus dem genannten Stand der Technik entnommen werden. Nach Beendigung des Prüfprogramms wird der Schalter 16 wieder geschlossen. Die den Bauteilen 11, 14, 18 parallel geschalteten Bauteile 42, 43, 46 stellen ein zweites, identisches Auslösesystem dar und dienen der Auslösung eines zweiten Airbags. Die Wirkungsweise bezüglich des Prüfprogramms ist identisch. Weitere, nicht dargestellte Sicherheitseinrichtungen können als weitere Parallelschaltungen hinzugefügt werden.

Die Wirkungsweise der Speichereinrichtung 49 besteht darin, daß beim Schließen einer der Schalter 14, 43 ohne daß eine Umschaltung der Schalter 45, 50 durch den Verzögerungssensor 52 erfolgt wäre, ein Strom über den Widerstand 44, einen oder beide der Schalter 14, 43, eine oder beide der Dioden 47, 48, die Speichereinrichtung 49, den Schalter 50, den Widerstand 51 und den Schalter 16 fließt. Die Widerstände sind dabei so bemessen, daß der Strom für einen Einspeichervorgang in der Speichereinrichtung 49 ausreicht, daß er jedoch nicht zur Auslösung einer der Sicherheitseinrichtungen 11, 42 ausreicht. Dies bedeutet z.B., daß bei einer Ausbildung der Speichereinrichtung 49 als Schmelzsicherung diese durchbrennt. Eine durchgebrannte Sicherung 49 ist daher gleichbedeutend mit einer Fehlauslösung, die entweder später anhand des Zustandes dieser Sicherung festgestellt werden kann, oder die durch eine getrennte, nicht näher dargestellte Anzeigevorrichtung angezeigt werden kann. Bei ordnungsgemäßer Funktion müßte nämlich bei einer Verzögerung schon vor dem Ansprechen der Auslösevorrichtung 10 der Verzögerungssensor 52 die beiden Schalter 50, 45 umschalten, d.h., den Schalter 45 schließen und den Schalter 50 öffnen. Ist dies der Fall, so werden beim Schließen der Schalter 14, 43 die zugeordneten Sicherheitseinrichtungen 11, 42 ausgelöst. Gleichzeitig bleibt die Sicherung 49 intakt, da der Schalter 50 geöffnet ist. Dies wird vor allem dann gewährleistet, wenn kurz vor dem Schließen des Schalters 45 der Schalter 50 öffnet. Wird somit nach einem Unfall eine intakte Sicherung 49 vorgefunden, so ist dies der Beweis dafür, daß eine ordnungsgemäße Auslösung infolge des Ansprechens beider Verzögerungssensoren 12, 52 stattgefunden hat. Ist dagegen die Sicherung 49 durchgebrannt, so ist dies ein Beweis dafür, daß ein Stromfluß durch die Sicherheitseinrichtungen 11, 42 stattgefunden hat, ohne daß der Verzögerungssensor 52 angesprochen hat. Eine solche Fehlauslösung, z.B. durch Kurzschlüsse, ist niemals ganz auszuschließen.

Die Parallelschaltung der Bauteile 44, 45 kann natürlich auch an einer anderen Stelle im Auslösestromkreis der Sicherheitseinrichtungen 11, 42 vorgesehen sein.

Schließlich kann in einer einfacheren Version auch auf die Prüfschaltung 19 bis 41 verzichtet werden, wodurch gleichzeitig die Bauteile 18, 46, 16, 17 entfallen würden.

Im folgenden wird ein Dimensionierungsbeispiel für die beschriebene Schaltung angegeben:
Versorgungsspannung: 12 Volt
Auslösestrom für die Sicherheitseinrichtungen 11, 42: 250 mA
Auslösestrom für die Speichereinrichtung 49: 250 mAo. 100 mA
Widerstände: R11, R42: 2 Ohm; R17: 500 Ohm; R18, R46: 1 000 Ohm, R44: 100 Ohm; R49: 4 Ohm; R51: 3 Ohm.

In den Fig. 2 und 3 ist der Aufbau der beiden Schalter 50, 45 sowie des Verzögerungssensors 52 in einem Bauteil dargestellt. Am unteren Ende eines geschlossenen, zylindrischen Glasröhrchens 60 sind die beiden Schaltkontakte 61, 62 des Öffner-Schalters 50 eingeschmolzen. Am oberen Ende dieses Glasröhrchens 60 sind die beiden Schaltkontakte 63, 64 des Schließer-Schalters 45 eingeschmolzen. Im Glasröhrchen 60 befindet sich eine Quecksilbermenge 65, die in der Ruhelage die beiden Schaltkontakte 61, 62 elektrisch miteinander verbindet. Bei einer Verzögerung (bzw. Beschleunigung) bewegt sich die Quecksilbermenge 65 zum anderen Ende des geneigt (siehe Fig. 4) befestigten Glasröhrchens infolge der auftretenden Trägheitskräfte. Dadurch werden die beiden Kontakte 61, 62 elektrisch voneinander getrennt und die Kontakte 63, 64 elektrisch miteinander verbunden. Zur besseren Benetzung der Schaltkontakte 63, 64 mit Quecksilber sind an diesen Schaltkontakten Platinelektroden 66, 67 angebracht. Diese Platinelektroden können natürlich auch an den Kontakten 61, 62 angebracht werden. Ebenso ist es möglich, eine Platinfläche auf andere Weise anzubringen, z.B. durch Anbringen einer Platinschicht auf die Elektroden selbst. Durch geeignete Wahl der Quecksilbermenge kann somit sichergestellt werden, daß der Schalter 50 öffnet bevor der Schalter 45 schließt.

In Fig. 3, in der das Glasröhrchen 60 in der Seitenansicht dargestellt ist, sind zwei Einbuchtungen 68, 69 in der Wandung des Glasröhrchens eingebracht. Durch diese Einbuchtungen kann die Verzögerungsschwelle verändert werden. Anstelle von zwei Einbuchtungen kann natürlich auch nur eine einzelne Einbuchtung vorgesehen sein, oder die Einbuchtungen können ganz entfallen. Die Verzögerungsschwelle kann weiterhin beeinflußt werden durch Verwendung von Quecksilberlegierungen, Veränderung der inneren Glasoberfläche (z.B. Rauhigkeit) oder durch weitere Variationen der Formgebung des Glaskörpers. So kann z.B. der zylindrische Glaskörper eine oder mehrere Biegungen aufweisen. Wegen der Unempfindlichkeit gegen Korrosion, Wegfall von Reibungsproblemen, prellfreier Kontaktgabe, geringer Kosten und Einstellbarkeit der Beschleunigungsschwelle ist ein solcher Quecksilberschalter somit besonders als Verzögerungssensor geeignet, zumal eine Verbindung des Verzögerungssensors mit mehreren Schaltern in einem Bauteil möglich ist.

In Fig. 4 ist eine vorteilhafte Befestigungsmöglichkeit des Glasröhrchens 60 dargestellt. Ein einseitig offenes, vorzugsweise aus Kunststoff bestehendes Gehäuse 70 weist eine Ausnehmung 71 auf, in der das Glasröhrchen 60 Platz findet. Die Kontakte 61, 62 einerseits und 63, 64 andererseits sind mit Zuleitungen 72, 73 bzw. 74, 75 verbunden, von denen infolge der Seitenansicht jeweils nur eine zu sehen ist. Diese elektrischen Zuleitungen 72 bis 75 werden in gebogene Kanäle 76 im Gehäuse 70 eingelegt. Die Kanäle 76 haben dabei im wesentlichen den gleichen Durchmesser wie die Zuleitungen 72 bis 75 und dienen sowohl der Zugentlastung wie auch als Abdichtung gegen das Ausfließen einer ursprünglich flüssigen Vergußmasse, mit der nach dem Einlegen des Glasröhrchens 60 und der Zuleitungen 72 bis 75 das Gehäuse 70 vergossen wird. Zur Befestigung des Gehäuses 70 im Fahrzeug dienen die beiden Befestigungslöcher 77, 78. Bei der Befestigung kann der Lagewinkel des Glasröhrchens korrigiert werden.

Zur Einstellung einer Verzögerungsschwelle ist im Glasröhrchen zwischen den Elektroden 61, 62 einerseits und den Elektroden 63, 64 andererseits eine Lochblende 79 befestigt, insbesondere eingeschmolzen.

## Ansprüche

1. Elektrische Schaltungsanordnung zur Registrierung von Fehlauslösungen für wenigstens eine dem Schutz der Insassen eines Fahrzeugs bei einem Unfall dienenden Sicherheits-einrichtung (11, 42), die in Abhängigkeit wenigstens eines Verzögerungssensors (12) durch einen in Reihe zur Sicherheitseinrichtung liegenden Schalter (14, 43) steuerbar ist, mit einer Speichereinrichtung (49), die nach Auslösung der Sicherheitseinrichtung (11, 42) anzeigt, ob es sich um eine erwünschte Auslösung oder um eine Fehlauslösung gehandelt hat, dadurch gekennzeichnet, daß die Reihenschaltung der auf einen festlegbaren Strom ansprechenden Speichereinrichtung (49) mit einem Öffner-Schalter (50) parallel zur Sicherheitseinrichtung (11, 42) vorgesehen ist, wobei der Öffner-Schalter (50) durch einen weiteren Verzögerungssensor (52) steuerbar ist und daß der den Öffner-Schalter (50) steuernde Verzögerungssensor (52) auch einen zweiten in Reihe zur Sicherheitseinrichtung (11, 42) liegenden Schließ-Schalter (45) steuert, wobei der weitere Verzögerungssensor bereits bei einem geringeren Verzögerungswert als der andere Verzögerungssensor (12) anspricht.

2. Schaltungsanordnung nach Anspruch 1, dadurch gekennzeichnet, daß bei Ansprechen des Verzögerungssensors (52) zuerst der Öffner-Schalter (50) und unmittelbar danach der Schließ-Schalter (45) betätigt wird.

3. Schaltungsanordnung nach einem der vorhergehenden Ansprüche, dadurch gekennzeichnet, daß der Öffner-Schalter (50) und der ihn steuernde Verzögerungssensor (52) als ein Bauteil ausgebildet sind.

4. Schaltungsanordnung nach Anspruch 3, dadurch gekennzeichnet, daß der zweite Schalter (45) ebenfalls in diesem einen Bauteil (45, 50, 52) enthalten ist.

5. Schaltungsanordnung nach Anspruch 4, dadurch gekennzeichnet, daß in einem zur senkrechten geneigten Röhrchen (60) jeweils an den Endpunkten zwei Schalterkontakte (61, 62 bzw. 63, 64) vorgesehen sind, die alternativ in Abhängigkeit des Auftretens von Trägheitskräften durch eine Quecksilbermenge (65) überbrückbar sind.

6. Schaltungsanordnung nach Anspruch 5, dadurch gekennzeichnet, daß wenigstens ein Teil der Schalterkontakte (63, 64) als Platinkontakte (66, 67) ausgebildet sind.

7. Schaltungsanordnung nach Anspruch 5 oder 6, dadurch gekennzeichnet, daß die Röhrchenwandung zwischen den Kontaktpaaren (61, 62 bzw. 63, 64) Einbuchtungen (68, 69) aufweist.

8. Schaltungsanordnung nach einem der Anprüche 5 bis 7, dadurch gekennzeichnet, daß im Röhrchen (60) zwischen den Kontaktpaaren (61, 62 bzw. 63, 64) eine Lochblende (79) vorgesehen ist.

9. Schaltungsanordnung nach einem der Ansprüche 5 bis 8, dadurch gekennzeichnet, daß das Röhrchen (60) eine Biegung aufweist.

10. Schaltungsanordnung nach einem der Ansprüche 5 bis 9, dadurch gekennzeichnet, daß das Röhrchen (60) in ein einseitig offenes Gehäuse (70) eingebettet ist, daß zu den beiden Enden des Röhrchens (60) Kanäle (76) durch das Gehäuse (70) führen, deren Durchmesser im wesentlichen dem Durchmesser von elektrischen Zuleitungen (72 bis 75) zu den Schalterkontakten (61 bis 64) entspricht und daß das Gehäuse (74) durch eine Vergußmasse abschließbar ist.

11. Schaltungsanordnung nach einem der vorhergehenden Ansprüche, dadurch gekennzeichnet, daß bei Vorhandensein mehrerer Sicherheitseinrichtungen (11, 42) diese über Entkopplungsdioden (47, 48) mit der Speichereinrichtung (49) verbunden sind.

12. Schaltungsanordnung nach einem der vorhergehenden Ansprüche, dadurch gekennzeichnet, daß die Speichereinrichtung (49) als Grenzstromsicherung, besonders Schmelzsicherung ausgebildet ist.

13. Schaltungsanordnung nach einem der vorhergehenden Ansprüche, dadurch gekennzeichnet, daß eine Prüfschaltung (19 bis 41) für wenigstens eine durch einen Verzögerungssensor (12) gesteuerte Auslösevorrichtung (10) vorgesehen ist, daß in Reihe zu dem durch die Auslösevorrichtung (10) gesteuerten Schalter (14, 43) ein weiterer, durch die Prüfschaltung (19 bis 41) gesteuerter und außerhalb des Prüfprogramms immer geschlossener Schalter (16) liegt, daß während des Prüfprogramms ein gleichzeitiges Leitendwerden beider Schalter (16, 14 bzw. 43) verhindert wird und daß alle in Reihe zur Sicherheitseinrichtung (11, 42) liegenden Schalter (16, 14 bzw. 43, 45) durch Prüfwiderstände (17, 18 bzw. 46) überbrückt sind.

## Claims

1. An electrical circuit arrangement for recording false releases of at least one safety device (11, 42) serving to protect the occupants of a vehicle during an accident and which is controllable in accordance with at least one deceleration sensor (12) through a switch (14, 43) arranged in series with the safety device, comprising a storage device (49) which, after release of the safety device (11, 42) indicates whether it has been a question of a desired release or of a false release, characterised in that, the series circuit of the storage device (49) responsive to an establishable current together with a normally closed switch (50) is provided in parallel with the safety device (11, 42) wherein the normally closed switch (50) is controllable by a further deceleration sensor (52) and that the deceleration sensor (52) controlling the normally closed switch (50) also controls a second normally opened switch (45) arranged in series with the safety device (11, 42) wherein the further deceleration sensor already responds at a lower deceleration value than the other deceleration sensor (12).

2. A circuit arrangement according to claim 1, characterised in that, when the deceleration sensor (52) responds, the normally closed switch (50) is first of all actuated and thereafter the normally opened switch (45) is actuated.

3. A circuit arrangement according to one of the preceding claims, characterised in that, the normally closed switch (50) and the deceleration sensor (52) controlling it are formed as a unit.

4. A circuit arrangement according to claim 3, characterised in that, the second switch (45) is also included in the said unit (45, 50, 52).

5. A circuit arrangement according to claim 4, characterised in that, two switch contacts (61, 62 or 63, 64) are provided at respective ends in a small tube (60) inclined with respect to the vertical and which can be bridged alternatively by a quantity of mercury (65) in accordance with the occurrence of inertia forces.

6. A circuit arrangement according to claim 5, characterised in that, at least a part of the switch contacts (63, 64) are formed as platinum contacts (66, 67).

7. A circuit arrangement according to claim 5 or 6, characterised in that, the wall of the small tube has inwardly curved portions (68, 69) between the pairs of contacts (61, 62 and 63, 64).

8. A circuit arrangement according to one of claims 5 to 7, characterised in that, a circular aperture (79) is provided in the small tube (60) between the pairs of contacts (61, 62 and 63, 64).

9. A circuit arrangement according to one of claims 5 to 8, characterised in that, the small tube (60) has a curvature.

10. A circuit arrangement according to one of claims 5 to 9, characterised in that, the small tube (60) is embedded in a housing (70) open at one end, that ducts (76) lead through the housing (70) to two ends of the small tube (60), the diameter of the ducts corresponding substantially to the diameter of electrical conductors (72 to 75) leading to the switch contacts (61 to 64) and that the housing (74) can be closed by a sealing compound.

11. A circuit arrangement according to one of the preceding claims, characterised in that, with the provision of a plurality of safety devices (11, 42) these are connected to the storage device (49) through de-coupling diodes (47, 48).

12. A circuit arrangement according to one of the preceding claims, characterised in that, the storage device (49) is formed as a current limiting safety device, especially as a safety fuse.

13. A circuit arrangement according to one of the preceding claims, characterised in that, a test circuit (19 to 41) is provided for at least one release device (10) controlled by a deceleration sensor (12), that a further switch (16) controlled by the test circuit (19 to 41) and always closed outside the test programme, is arranged in series with the switch (14, 43) controlled by the release device (10), that, during the test programme, simultaneous conduction by the two switches (16, 14 or 43) is prevented and that all the switches (16, 14 or 43, 45) arranged in series with the safety device (11, 42) are bridged by test resistors (17, 18 or 46).

**Revendications**

1. Circuit électrique pour enregistrer le déclenchement erroné d'au moins une installation de sécurité (11, 42) servant à la protection des occupants d'un véhicule lors d'un accident, qui peut être commandée en fonction d'au moins un détecteur à retardement (12) par un contacteur (14, 43) branché en série avec l'installation de sécurité, avec un dispositif à mémoire (49) qui, après le déclenchement de l'installation de sécurité (11, 42) indique s'il s'agit d'un déclenchement souhaité ou d'un déclenchement erroné, caractérisé en ce que le montage en série du dispositif à mémoire (49) avec un contacteur d'ouverture (50) est prévu en parallèle à l'installation de sécurité (11, 42), le contacteur d'ouverture (50) pouvant être commandé par un autre détecteur à retardement (52) et en ce que le détecteur à retardement (52) commandant le contacteur d'ouverture (50) commande également un second contacteur (45), de fermeture, branché en série avec l'installation de sécurité (11, 42), le second détecteur à retardement agissant déjà pour une valeur de retardement plus faible que l'autre détecteur à retardement (12).

2. Circuit selon la revendication 1, caractérisé en ce que lors du fonctionnement du détecteur à retardement (52), le contacteur d'ouverture (50) est d'abord actionné et, immédiatement ensuite, le contacteur de fermeture (45).

3. Circuit selon l'une des revendications précédentes, caractérisé en ce que le contacteur d'ouverture (50) et le détecteur à retardement (52) qui le commande sont réalisés sous forme d'un élément de construction.

4. Circuit selon la revendication 3, caractérisé en ce que le second contacteur (45) est également contenu dans cet élément de construction (45, 50, 52).

5. Circuit selon la revendication 4, caractérisé en ce que dans un petit tube (60) incliné sur la verticale, deux contacts de commutation (61, 62 et 63, 64) sont prévus en chacun des points d'extrémité, ces contacts pouvant être reliés alternativement par un volume de mercure (65) en fonction de l'apparition de forces d'inertie.

6. Circuit selon la revendication 5, caractérisé en ce qu'au moins une partie des contacts de commutation (63, 64) sont agencés sous forme de contacts en platine (66, 67).

7. Circuit selon l'une des revendications 5 ou 6, caractérisé en ce que la paroi du petit tube présente des renfoncements (68, 69) entre les paires de contacts (61, 62 et 63, 64).

8. Circuit selon l'une quelconque des revendications 5 à 7, caractérisé en ce qu'un diaphragme perforé (79) est prévu dans le petit tube (60) entre les paires de contacts (61, 62 et 63, 64).

9. Circuit selon l'une quelconque des revendications 5 à 8, caractérisé en ce que le petit tube (60) présente un rétrécissement.

10. Circuit selon l'une quelconque des revendications 5 à 9, caractérisé en ce que le petit tube (60) est enrobé dans un boîtier (70) ouvert d'un côté, en ce que des conduits (76) pénètrent dans le boîtier (70) vers les deux extrémités du petit tube (60), le diamètre de ces conduits correspondant sensiblement au diamètre de conducteurs électriques (72 à 75) allant aux contacts de commutation (61 à 64) et en ce que le boîtier (70) peut être fermé par une masse coulée.

11. Circuit selon l'une des revendications précédentes, caractérisé en ce qu'en présence de plusieurs installations de sécurité (11, 42), celles-ci sont reliées au dispositif à mémoire (49) par l'intermédiaire de diodes de découplage (47, 48).

12. Circuit selon l'une des revendications précédentes, caractérisé en ce que le dispositif à mémoire (49) est réalisé en tant que coupe circuit à courant limite, notamment coupe-circuit fusible.

13. Circuit selon l'une des revendications précédentes, caractérisé en ce qu'il est prévu un montage de contrôle (19 à 41) pour au moins un dispositif de déclenchement (10) commandé par un détecteur à retardement (12), en ce qu'en série avec le contacteur (14, 43) commandé par le dispositif de déclenchement (10) est branché un autre contacteur (16) commandé par le montage de contrôle (19 à 41) et toujours fermé en dehors du programme de contrôle, en ce que pendant le programme de contrôle l'état conducteur simultané des deux contacteurs (16, 14 ou 43) est empêché et en ce que tous les contacteurs (16, 14 et 43, 45) branchés en série avec l'installation de sécurité (11, 42) sont shuntés par des résistances de contrôle (17, 18 et 46).

# FIG. 1

FIG.3

FIG.2

FIG.4